# EUROPEAN PATENT SPECIFICATION

(11) **EP 0 530 155 B1**
(45) Date of publication and mention of the grant of the patent: **22.11.1995**
(21) Application number: 92830362.7
(22) Date of filing: 07.07.1992
(51) Int. Cl.: F16D 55/46, F16D 65/853

(54) **An oil-immersed multiplate disk brake**
In Öl laufende Mehrscheibenbremse
Frein à disques multiples immergé dans l'huile

(30) Priority: 27.08.1991 IT MO910120
(43) Date of publication of application: 03.03.1993
(73) Proprietor: OMCI S.p.A. OFFICINE METALMECCANICHE COSTRUZIONI INDUSTRIALI, 41013 Castelfranco Emilia (Modena) (IT)
(72) Inventor: Magni, Giorgio, I-41100 Modena (IT)
(74) Representative: Lanzoni, Luciano

(56) References cited:
- EP-A- 0 361 864
- DE-A- 3 725 692
- FR-A- 2 203 463

## Description

### Description.

The invention relates to an oil immersed multiplate disk brake.

Specifically, but not exclusively, the invention is usefully employed in transmission shaft braking, in particular for the braking of shafts and/or half-shafts housed in bridges or axles of vehicles of large dimensions. In such vehicles it is advantageous to effect the braking of the wheels, generally the drive wheels, on the shafts, or better, on the half-shafts which tramsmit motion to the wheels.

EP-A- 361 864 shows an oil immersed disk brake which comprises pressure plates with a ball and ramp camming mechanism.

It is usual to employ oil-immersed disk brakes having characteristics which render them particularly applicable internally to transmission boxes containing a considerable mass of lubricating oil suitable both for the functioning of the brake and for the dispersing of the thermal energy created during the braking action. One of the principal drawbacks of the prior art and in particular of the applications where the potential which must be dispersed is considerable, is represented by the rapid loss of efficiency of the braking apparatus caused by the rapid wearing or destruction of the brake disks.

The attempt to eliminate this drawback by providing a cooling plant for the oil, apart from somewhat complicating the entire construction, has not shown itself definitively and alone able to solve the problem of reducing the wearing and deterioration phenomenon, and thus the loss of efficiency of the brake, to acceptable levels. Thus the present invention, as characterised in the claims which follow, proposes a simple and effective solution to the aforementioned problem.

Further characterstics and advantages of the present invention will better emerge from the detailed description that follows, made with reference to the accompanying drawings, which represent a preferred embodiment here illustrated in the form of a non-limiting example, in which:

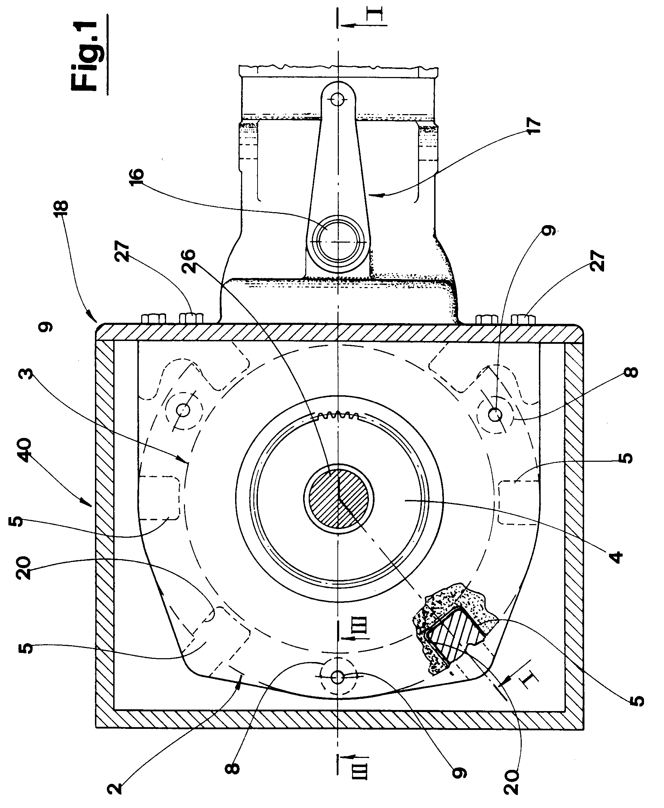

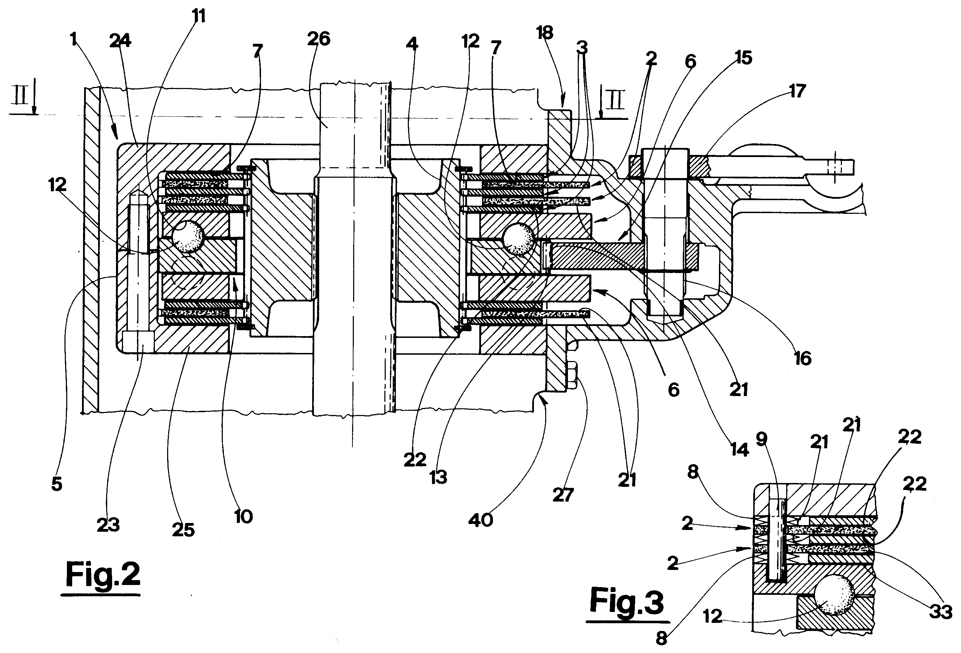

- Figure 1 shows a schematic section taken along line II-II of figure 2;
- Figure 2 shows a schematic section taken along line I-I of figure 1;
- Figure 3 shows, in enlarged scale, a part of a section taken along line III-III of figure 1.

With reference to the drawings, 1 denotes a frame, made in two parts 24 and 25 solidly constrained to each other by means of screws 23, internally to which frame 1 an entire braking device is housed, including the hub 4 in which a shaft 26 is coaxially coupled and fixed in rotation. The frame 1 exhibits a rectangular-shaped flange 18, solidly constrained and arranged to lie parallel to the rotation axis coinciding with the axis of the shaft 26 and of the hub 4, and located laterally.

The flange 18 permits of centering as well as of solidly connecting, by means of screws 27, the entire brake block on a corresponding flanging arranged on an aperture bored, in the example, on a bridge or on an axle, denoted in its entirety by 40, internally to which the shaft 26 is arranged.

The illustrated embodiment comprises two disk series located in diametrically opposed positions with respect to the pressure-plate group which operates symmetrically on the two series. The said group comprises an annular-shaped central element 10 arranged coaxially and able to perform limited rotations in both senses. The central element 10, equipped on both of its two opposite faces with ramp-grooves 11 of known type in which spheres 12 are partially housed which spheres 12 interact with a pressing element 6, is in its turn constrained to the frame 1. Each series of disks is comprised between the relative pressing element 6 and a coaxial annular surface 7, fixed and being part of the frame 1. The central element 10 is peripherally equipped with an external straight-toothed circular cylindrical cogged tract 13 by means of which the said central element 10 is coupled with a corresponding external cylindrical cogged tract 14 of a cogged sector 15 mounted solidly on a pivot 16 parallel to the rotation axis of the hub 4. The pivot 16 is solidly connected to an external lever 17 through which rotation can be produced in the two senses of the said pivot 16 and thus of the central element 10.

Upon this rotation the pressing elements 6 are activated to translate axially in order to effect the braking action by the interaction between the spheres 12 and the relative ramp-grooves 11. Each series of disks is formed by a unit of disks 2 and 3 reciprocally arranged side-by-side and alternated one with the other. The disks 2, annular in shape, are coupled, at their most external edge, to the frame 1 with a coupling that leaves them free to slide in a direction which is parallel to the rotation axis. The disks 3, also of annular shape, are instead constrained to the hub 4 with a coupling that establishes between the parts a perfect rotation solidarity while leaving freedom to slide in axial direction. In particular, the disks 2 exhibit circular crown shape with an external diameter which is considerably bigger that the external diameter of the disks 3. The connection, solid in rotation but free in axial sliding, of the disks 2 to the frame 1 is made by means of the coupling of longitudinal elements 5, or stud-bolts belonging to the frame 1, in hollow seatings 20 arranged on the periphery of the disks 2 and uniformly distributed along the said periphery. The total extension of the hollow seatings 20, evaluated in the plane of the disks 2, is of modest entity with respect to the portions of surface, indicated by 21, of the disks 2 themselves, which can be defined as "non-active" during braking, since they do not intervene mechanically directly, not being directly facing the corresponding "active" surfaces 33 of the disks 3, which are also crown-circular in shape.

The crown-circular shaped portions of the disks 2 surface, defined as "active", that is destined to be placed on the "active" surfaces 33 of the disks 3 and thus to intervene directly in the braking action, are denoted by 22 and constitute only a part of the total lateral surfaces of the disks 2, to which belong also the portions of the "non-active" external surfaces 21. The disks 2 are kept reciprocally distanced one from the other in an axial direction and with respect to the disk-pushing element 6 and the coaxial annular surface 7 between which the said disks 2 are comprised, by means of Belleville washers 8 distributed at the portions of external surfaces 21 and held in position by small guide pivots 9.

The Belleville washers 8 perform also the recall function of the brake-command organ, resetting it to the initial position at the end of the actuator command action.

In particular, the proportioning adopted for the disks and that is the predisposition of the disks 2 of considerably greater diameter than the disks 3, with the aim of creating large external surfaces 21 which are not facing each other and which therefore are not destined to superimpose on the "active" surfaces 33 of the disks 3, permits of realising an extremely good thermal exchange situation between the pack of disks and the mass of oil in which the pack is immersed, a thermal exchange which is sufficient to prevent disk wearing or deterioration phenomena. Naturally the proportioning of the said "non-active" external surfaces 21 with respect to the corresponding "active" surfaces 22 can be decided according to specific particular needs. The regularity and the uniformity of the thermal exchange conditions are further facilitated by the presence of the distancing elements, constituted by the Belleville washers 8, which operate between .the disks 2 keeping them reciprocally equidistanced, making the circulation of the oil more effective. The invention permits thus of realising an excellent and uniform breakdown of the thermal energy dissipated between the disks during the braking 20 action.

## Claims

1. An oil immersed multiplate disk brake, comprising at least one series of disks formed by a first and a second group of disks (2, 3) arranged alternatingly side-by-side each group consisting of one or more disks; the first group of disks (2) being slidably axially coupled to the brake frame (1) but solid in rotation; the second group of disks (3) being solidly rotatably constrained with possibility of relative axial translation on a hub (4); means being provided which act on command to press the disks one against another in a direction which is parallel to the rotation axis, characterised in that the disks (2) of the first group exhibit a circular crown shape with an external diameter which is greater than the external diameter of the disks (3) of the second group; the said solid connection of the disks of the first group which is axially slidably free being realised by means of the coupling of longitudinal elements or stud-bolts (5) solid to the frame (1), in hollow seatings (20) arranged peripherally in the said disks; the extension of the said hollow seatings (20) in the plane of the disks (2) being small with respect to the portions of the surface (21) of the disks (2) which are "non-active " since they do not mechanically directly intervene in the execution of the braking operation in that they are not directly facing and superposable on the "active" surfaces (33), of circular crown shape, of the said second group of disks (3).

2. A brake as in claim 1, characterised by the fact that the disks (2) of the first group are kept reciprocally distanced one from the other with respect to a pressing element (6) and a fixed surface (7), between which surfaces the disks (2) of the first group are comprised, by means of elastic means constituted by Belleville washers (8) distributed at portions of a surface (21) and held in position by guide pivots (9).

3. A brake as in claim 2, characterised by the fact that it comprises two series of the said disks located in opposite positions with respect to a plane perpendicular to the rotation axis of the said hub (4); a disk pressing device being positioned between the two said series of disks which pressing device comprises a coaxial central element (10) able to make limited rotations in the two senses ad equipped, on each of its two opposite faces, with ramp-grooves (11) in which spheres (12) are partially housed, which spheres (12) interact with a pressing element (6) constrained axially slidably to the frame (1); each said disk series being comprised between the relative pressing element (6) and a fixed coaxial annular surface (7) being an integral part of the said frame (1).

4. A brake as in claim 3, characterised by the fact that the said central element (10) is peripherally equipped with an external culindrical cogged portion (13) by means of which it is coupled with a corresponding external cylindrical cogged portion (14) of a cogged sector (15) mounted solidly on a pivot (16) which is solidly connected to an external lever (17) through which rotation of the pivot (16) can be produced in both senses.

5. A brake as in claim 4, characterised by the fact that the said frame (1) exhibits a flange (18) solidly constrained to it lying parallel to the rotation axis and located laterally, with the function of permitting the centering and the solid connecting of the entire brake block on a corresponding flanging arranged at an aperture provided in an axle (40) internally to which the part of the entire brake block can be introduced, comprising the hub with the disks unit.

## Patentansprüche

1. Eine in Öl laufende Mehrscheibenbremse, bestehend aus mindestens einer Serie von Scheiben, gebildet durch eine erste und eine zweite Scheibengruppe (2, 3), wechselweise Seite an Seite angeordnet und jede Gruppe bestehend aus einer oder mehreren Scheiben; die erste Scheibengruppe (2), ist axial gleitend, jedoch fest in der Rotation mit dem Bremsrahmen (1) gepaart; die zweite Scheibengruppe (3) ist fest rotierend geführt mit der Möglichkeit einer entsprechenden axialen Übersetzung auf die Nabe (4); es sind Vorrichtungen dazu vorgesehen, um auf Befehl die Scheiben eine gegen eine andere zu drücken, und dies in einer Richtung, die parallel zur Rotationsachse verläuft, dadurch gekennzeichnet, daß die Scheibe (2) der ersten Gruppe eine runde Kreisform mit einem Außendurchmesser aufweist, der größer ist als der Außendurchmesser der Scheibe (3) der zweiten Gruppe; die genannte feste Verbindung der Scheiben der ersten Gruppe, die axial gleitend frei ist, wird durch die feste Verbindung der Längselemente oder Schraubenbolzen (5) mit dem Rahmen (1) erreicht, und dies in hohlen Sitzen (20), die peripherisch in den genannten Scheiben angeordnet sind; die Ausdehnung der genannten hohlen Sitzen (20), die klein sind in Bezug auf die Portionen der Oberfläche (21) der Scheiben (2), die "nichtaktiv" sind, da diese mechanisch nicht direkt auf die Durchführung der Bremsoperation einwirken, da diese der "aktiven" Oberfläche der runden Kronenform der genannten zweiten Scheibengruppe (3) nicht direkt entgegenstehen bzw. darüberliegen.

2. Eine Bremse gemäß Patentanspruch 1., dadurch gekennzeichnet, daß die Scheiben (2) der ersten Gruppe reziprok entfernt, eine von der anderen, gehalten werden, und dies in Bezug auf ein Druckelement (6) und eine feste Oberfläche (7) und zwischen deren Oberflächen die Scheiben (2) der ersten Gruppe gepresst werden, und dies durch elastische Mittel, bestehend aus Belleville-Federringen (8), die auf Portionen der Oberfläche (21) verteilt sind und durch Führungs-Drehzapfen (9) in Position gehalten werden.

3. Eine Bremse gemäß Patentanspruch 2., dadurch gekennzeichnet, daß sie aus folgenden Elementen besteht: zwei Serien der genannten Scheiben, die sich in Bezug auf eine Ebene senkrecht zur Rotationsachse der genannten Nabe (4) in gegenübergesetzter Position befinden; einer Scheibendruckvorrichtung, die zwischen den beiden genannten Serien von Scheiben angebracht ist und deren Druckvorrichtung ein koaxiales Zentralelement (10) enthält, das in der Lage ist, limitierte Rotationen in den beiden Richtungen durchzuführen, und das an jedem Ende seiner gegenüberliegenden Oberflächen mit Rampenrinnen (11) ausgestattet ist, in denen Sphären (12) teilweise untergebracht sind, wobei diese Sphären (12) mit einem Druckelement (6), das zum Rahmen (1) axial gleitend geführt wird, zwischenwirken; jede genannte Scheibenserie ist zwischen dem entsprechenden Druckelement (6) und einer festen koaxialen, ringförmiger Oberfläche (7), die integrierender Bestandteil des genannten Rahmens (1) ist, enthalten.

4. Eine Bremse gemäß Patentanspruch 3., dadurch gekennzeichnet, daß das genannte Zentralelement (10) peripherisch mit einer außen zylindrisch gezahnten Portion (13) ausgestattet ist, die mit einer entsprechender, außen zylindrisch gezahnten Portion (14) eines gezahnten Sektors (15) gekoppelt ist, wobei dieser fest auf einem Drehzapfen (16) montiert ist, der fest mit einem äußeren Herbel (17), durch den die Rotation des Drehzapfens (16) in beiden Richtungen erzeugt werden kann, montiert ist.

5. Eine Bremse gemäß Patentanspruch 4., dadurch gekennzeichnet, daß der genannte Rahmen (1) einen fest zu ihm geführten Flansch (18) aufweist, da dieser parallel zur Rotationsachse liegt und sich seitlich befindet, und dies mit der Funktion, das Zentrieren und die feste Verbindung des gesamten Bremsblocks zu ermöglichen, und dies auf einem entsprechenden Flansch, vorgesehen in einer Achse (40), zu der innen die Teile des gesamten Bremsblocks eingeführt werden können, einschließlich der Nabe mit dem Scheibenelement.

## Revendications

1. Un frein à disques multiples immergé dans l'huile, qui comprend au moins une série de disques formée d'un premier et d'un deuxième groupe de disques (2, 3) disposés côte à côte alternativement, chaque groupe consistant en un ou plusieurs disques; le premier groupe de disques (2) étant accouplé, de façon telle qu'il puisse glisser axialement, avec la structure du frein (1) mais étant solidaire dans la rotation; le deuxième groupe de disques (3) étant encastré, d'une façon telle qu'il puisse tourner solidairement, avec la possibilité de translation axiale relative, sur un moyeu (4); il est fourni de moyens qui agissent sur commande pour presser les disques l'un contre l'autre dans une direction qui est parallèle à l'axe de rotation, caractérisé par le fait que les disques (2) du premier groupe ont la forme d'une couronne circulaire dont le diamètre extérieur est plus grand que le diamètre extérieur des disques (3) du deuxième groupe; ladite liaison solidaire des disques du premier groupe qui est libre de glisser axialement étant réalisée au moyen de l'accouplement d'éléments longitudinaux ou de goujons (5) solidaires avec la structure (1), dans des sièges creux (20) qui sont disposés périphériquement sans lesdits disques; l'extension desdits sièges creux (20) sur le plan des disques (2) étant faible par rapport aux parties de la surface (21) qui sont "non actives" puisqu'elles n'interviennent pas directement et mécaniquement dans l'exécution de l'opération de freinage, étant donné qu'elles ne sont pas directement en face des surfaces "actives" (33), en forme de couronne circulaire, dudit deuxième groupe de disques, et qu'elles ne sont pas superposables à celles-ci.

2. Un frein comme celui de la revendication 1, caractérisé par le fait que les disques (2) du premier groupe sont tenus à une certaine distance réciproquement l'un de l'autre par rapport à l'élément de pression (6) et à une surface fixe (7), entre lesquelles surfaces les disques (2) du premier groupe sont compris, au moyen de moyens élastiques constitués par des rondelles de Belleville (8) distribuées sur les parties d'une surface (21) et tenues dans leur position par des pivots de guidage (9).

3. Un frein comme celui de la revendication 2, caractérisé par le fait qu'il comprend deux séries desdits disques placées dans des positions opposées par rapport à un plan perpendiculaire à l'axe de rotation dudit moyeu (4); un dispositif de pression des disques étant positionné entre lesdites deux séries de disques, lequel dispositif de pression des disques comprend un élément central et coaxial (10) à même de faire des rotations limitées dans Bles deux sens et équipé, sur chacune de ses deux faces opposées, de rainures de rampe (11) dans lesquelles sont partiellement logées des sphères (12), lesquelles sphères (12) interagissent avec un élément de pression (6) encastré, de façon telle qu'il puisse glisser axialement par rapport à la structure (1); chacune desdites séries de disques étant comprise entre l'élément de pression relatif (6) et une surface annulaire coaxiale fixe (7) qui fait partie intégrante de ladite structure (1).

4. Un frein comme celui de la revendication 3, caractérisé par le fait que ledit élément central (10) est équipé périphériquement d'une partie cylindrique extérieure dentée (13) au moyen de laquelle il est accouplé avec un partie cylindrique extérieure dentée correspondante (14) d'un secteur denté (15) monté solidairement sur un pivot (16) qui est lié solidairement à un levier extérieur (17) à travers lequel la rotation du pivot (16) peut être produite dans les deux sens.

5. Un frein comme celui de la revendication 4, caractérisé par le fait que ladite structure (1) présente une bride (18) qui est solidairement encastrée dans la structure, qui s'étend parallèlement à l'axe de rotation et qui est logée latéralement, dont la fonction est de permettre le centrage et la liaison solidaire du bloc de freinage tout entier sur un rabattement des brides correspondant disposé sur une ouverture procurée dans un essieu (40) à l'intérieur de laquelle peut être introduite la partie du bloc de freinage tout entier, y compris le moyeu avec les unités de disques.
